(19) Europäisches Patentamt
European Patent Office
Office européen des brevets

(11) **EP 3 389 054 B1**

(12) **EUROPEAN PATENT SPECIFICATION**

(45) Date of publication and mention
of the grant of the patent:
**15.06.2022 Bulletin 2022/24**

(21) Application number: **16872942.4**

(22) Date of filing: **06.12.2016**

(51) International Patent Classification (IPC):
**G21F 9/12** *(2006.01)*        **B01J 20/10** *(2006.01)*
**B01J 20/28** *(2006.01)*

(52) Cooperative Patent Classification (CPC):
**G21F 9/12; B01J 20/10; B01J 20/28;**
**B01J 20/28002**

(86) International application number:
**PCT/JP2016/086127**

(87) International publication number:
**WO 2017/099044 (15.06.2017 Gazette 2017/24)**

(54) **METHOD FOR TREATING RADIOACTIVE WASTE LIQUID CONTAINING RADIOACTIVE CESIUM AND RADIOACTIVE STRONTIUM**

VERFAHREN ZUR BEHANDLUNG VON RADIOAKTIVEM FLÜSSIGABFALL MIT RADIOAKTIVEN CÄSIUM UND RADIOAKTIVEM STRONTIUM

PROCÉDÉ DE TRAITEMENT DE DÉCHETS LIQUIDES RADIOACTIFS CONTENANT DU CÉSIUM RADIOACTIF ET DU STRONTIUM RADIOACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2015 JP 2015240942**

(43) Date of publication of application:
**17.10.2018 Bulletin 2018/42**

(73) Proprietors:
• **Ebara Corporation**
**Ohta-ku, Tokyo 144-8510 (JP)**
• **Nippon Chemical Industrial Co., Ltd.**
**Koto-ku, Tokyo 136-8515 (JP)**

(72) Inventors:
• **SAKUMA, Takashi**
**Tokyo 144-8510 (JP)**
• **KOMATSU, Makoto**
**Tokyo 144-8510 (JP)**
• **IZUMI, Takeshi**
**Tokyo 144-8510 (JP)**
• **MIYABE, Shinsuke**
**Tokyo 136-8515 (JP)**
• **KINOSE, Yutaka**
**Tokyo 136-8515 (JP)**
• **KOZASU, Kenta**
**Tokyo 136-8515 (JP)**
• **NOGUCHI, Eiji**
**Tokyo 136-8515 (JP)**
• **SAKAMOTO, Takeshi**
**Tokyo 136-8515 (JP)**

(74) Representative: **Carstens, Dirk Wilhelm**
**Wagner & Geyer Partnerschaft mbB**
**Patent- und Rechtsanwälte**
**Gewürzmühlstraße 5**
**80538 München (DE)**

(56) References cited:
**EP-A1- 3 385 954        WO-A1-2015/146962**
**JP-A- 2014 029 269      JP-A- 2015 042 395**

• **BEHRENS,E.A. ET AL.: 'Assessment of a Sodium Nonatitanate and Pharmacosiderite-Type Ion Exchangers for Strontium and Cesium Removal from DOE Waste Simulants'**
**ENVIRON.SCI.TECHNOL vol. 32, 1998, pages 101 - 107, XP002084625**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a treatment method of radioactive waste water containing radioactive cesium and radioactive strontium, in particular, a treatment method of radioactive waste water for removing both elements, the radioactive cesium and the radioactive strontium contained in the waste water containing contaminating ions such as seawater, generated in a nuclear power plant.

BACKGROUND ART

The accident caused by the Great East Japan Earthquake on March 11, 2011, in the Fukushima Daiichi Nuclear Power Station, has generated a large amount of radioactive waste water containing radioactive iodine. The radioactive waste water includes: the contaminated water generated due to the cooling water poured into a reactor pressure vessel, a reactor containment vessel, and a spent fuel pool; the trench water accumulated in a trench; the subdrain water pumped up from a well called a subdrain in the periphery of a reactor building; groundwater; and seawater (hereinafter, referred to as "radioactive waste water"). Radioactive substances are removed from these radioactive waste waters by using a treatment apparatus called, for example, SARRY (Simplified Active Water Retrieve and Recovery System (a simple type contaminated water treatment system) cesium removing apparatus) or ALPS (a multi-nuclide removal apparatus), and the water thus treated is collected in a tank.

Examples of a substance capable of selectively adsorbing and removing radioactive cesium among radioactive substances include ferrocyanide compounds such as iron blue, mordenite being a type of zeolite, an aluminosilicate, and titanium silicate (CST). For example, in SARRY, in order to remove radioactive cesium, IE96 manufactured by UOP LLC, an aluminosilicate, and IE911 manufactured by UOP LLC, a CST are used. Examples of a substance capable of selectively adsorbing and removing radioactive strontium include natural zeolite, synthetic A-type and X-type zeolite, a titanate salt, and CST. For example, in ALPS, in order to remove radioactive strontium, an adsorbent, a titanate salt is used.

In "Contaminated Liquid Water Treatment for Fukushima Daiichi NPS (CLWT)" ("Contaminated Liquid Water Treatment for Fukushima Daiichi NPS (CLWT)" http://www.nuce-aesj.org/projects:clwt:start) published by Division of Nuclear Fuel Cycle and Environment in the Atomic Energy Society of Japan, the cesium and strontium adsorption performances of IE910 manufactured by UOP LLC, a powdery CST, and IE911 manufactured by UOP LLC, a beaded CST, have been reported that the powdery CST has a capability of adsorbing radioactive cesium and strontium, and the granular CST is high in the cesium adsorption performance but low in the strontium adsorption performance.

It has also been reported that a modified CST obtained by surface treating a titanium silicate compound by bringing a sodium hydroxide aqueous solution having a sodium hydroxide concentration within a range of 0.5 mol/L or more and 2.0 mol/L into contact with the titanium silicate compound achieves a cesium removal efficiency of 99% or more and a strontium removal efficiency of 95% or more (JP 5285183 B).

The powdery CST can be used, for example, in a treatment method based on flocculation, but is not suitable for the method by passing the water to be treated through a column packed with an adsorbent, adopted in SARRY and ALPS.

In order to improve the strontium adsorption performance of the granular CST, the treatments and the operations shown in JP 5285183 B and JAEA-Research 2011-037 have been investigated, but such treatments and operations require large amounts of chemicals so as to lead to a cost increase.

Accordingly, there is demanded a treatment method of radioactive waste water, being high in the adsorption performances of both of cesium and strontium without performing cumbersome treatments and operations, and using a granular CST suitable for the treatment method of passing water through an adsorption column. On the other hand, CST is weak against heat, undergoes composition change when strongly heated, and the capabilities of adsorbing cesium and strontium are degraded. In a zeolite molded body, a binder such as a clay mineral is used, and the zeolite molded body is fired at 500 °C to 800°C to improve the strength of the molded body; however, the adsorption capability of CST is degraded by heating strongly as described above, and accordingly CST cannot be fired. Therefore, it has been necessary to form a granular CST without heating strongly.

It has also been reported that the sodium ions have a tendency to suppress the ion-exchange reaction between the radioactive cesium and CST (NPL 2), and thus there is a problem that the removal performance of the radioactive cesium and the radioactive strontium from high-concentration seawater is degraded.

For the purpose of enhancing the adsorption performance of cesium and strontium from seawater containing sodium ions, the present inventors have proposed an adsorbent for cesium and strontium including: at least one selected from crystalline silicotitanates represented by the general formulas: $Na_4Ti_4Si_3O_{16} \cdot nH_2O$, $(Na_xK_{(1-x)})_4Ti_4Si_3O_{16} \cdot nH_2O$ and $K_4Ti_4Si_3O_{16} \cdot nH_2O$ wherein x represents a number of more than 0 and less than 1, and n represents a number of 0 to 8; and at least one selected from titanate salts represented by the general formulas: $Na_4Ti_9O_{20} \cdot mH_2O$,

$(Na_yK_{(1-y)})_4Ti_9O_{20} \cdot mH_2O$ and $K_4Ti_9O_{20} \cdot mH_2O$ wherein y represents a number of more than 0 and less than 1, and m represents a number of 0 to 10, as well as a method for producing the adsorbent (JP 5696244 B).

JP 2014 029269 A discloses a radioactive effluent processing method and radioactive effluent processing device.

## SUMMARY OF INVENTION

### TECHNICAL PROBLEM

An object of the present invention is to provide a treatment method of and a treatment apparatus for radioactive waste water, capable of removing both of radioactive cesium and radioactive strontium with a high removal efficiency and simply, by a method of passing water to be treated through a column packed with an adsorbent.

### SOLUTION TO PROBLEM

As a result of a diligent study in order to solve the above-described problem, the present inventors have found that both of radioactive cesium and radioactive strontium can be removed simply and efficiently by passing radioactive waste water through an adsorption column packed with a specific adsorbent under a specific water passing conditions, and have completed the present invention.

In accordance with the present invention, a treatment method of radioactive waste water as set forth in the appended claims is provided. The present invention includes the following aspects.

[1] A treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent, wherein the adsorbent comprises a crystalline silicotitanate having a crystallite diameter of 60 Å or more and 250 Å or less obtained by the Scherrer equation on the basis of the FWHM and having a full width at half maximum, in short FWHM, of 0.3° or more and 0.9° or less of the diffraction peak in the lattice plane (100) at $2\theta=10°$ or more and $2\theta=13°$ or less in an X-ray diffraction analysis using Cu-K$\alpha$ line as an X.ray source, the crystalline silicotitanate represented by the general formula: $A_4Ti_4Si_3O_{16} \cdot nH_2O$ wherein A is Na or K or a combination thereof, and n represents a number of 0 to 8, wherein the adsorbent does not comprise titanate salts, wherein the adsorbent does not comprise any binders and wherein the adsorbent for cesium and strontium is a granular adsorbent having a grain size of 250 $\mu$m or more and 1200 $\mu$m or less, wherein the absorbent is packed to a height of 10 cm or more and 300 cm or less in the adsorption column, and wherein the radioactive waste water is passed through the adsorption column at a linear velocity (LV) of 1 m/h or more and 40 m/h or less and a space velocity (SV) of 200 $h^{-1}$ or less.

[2] The treatment method according to [1], wherein the radioactive waste water is waste water containing a Na ion, a Ca ion and/or a Mg ion.

[3] The treatment method according to [1] or [2], wherein the adsorbent comprises 99.5 % by mass or more of the crystalline silicotitanate.

### ADVANTAGEOUS EFFECTS OF INVENTION

According to the present invention, both of radioactive cesium and radioactive strontium can be removed with a high removal efficiency and simply by a treatment method of passing water to be treated through an adsorption column packed with an adsorbent.

### BRIEF DESCRIPTION OF DRAWINGS

Fig. 1 shows the X-ray diffraction spectrum of the adsorbent produced in Production Examples 1 to 3.
Fig. 2 is a graph showing the cesium adsorption removal performance in Example 2.
Fig. 3 is a graph showing the strontium adsorption removal performance in Example 2.
Fig. 4 is a graph showing the cesium adsorption removal performance in Example 3.
Fig. 5 is a graph showing the strontium adsorption removal performance in Example 3.

DESCRIPTION OF EMBODIMENTS

The present invention relates to a treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent, according to claim 1.

The adsorbent used in the treatment method of the present invention includes a specific crystalline silicotitanate. The silicotitanate has, in an X-ray diffraction analysis using Cu-K$\alpha$ line as an X-ray source, the half width of the main diffraction peak of 2$\theta$=10° or more and 13° or less is 0.9° or less, preferably 0.3° or more and 0.9° or less, and more preferably 0.3° or more and 0.8° or less; the crystallite diameter obtained by the Scherrer equation on the basis of the aforementioned half width is 60 Å or more and 250 Å or less, more preferably 80 Å or more and 230 Å or less, and further preferably 150 Å or more and 230 Å or less.

In addition, because of further improving the capabilities of adsorbing cesium and strontium, the crystalline silicotitanate has the mass ratio of the potassium content in terms of $K_2O$ to $A_2O$ ($K_2O/A_2O$) is more than 0% by mass and 40% by mass or less and preferably 5% by mass or more and 40% by mass or less.

The adsorbent used in the treatment method of the present invention is a granular adsorbent having a grain size of 250 $\mu$m or more and 1200 $\mu$m or less, preferably 300 $\mu$m or more and 800 $\mu$m or less, and more preferably 300 $\mu$m or more and 600 $\mu$m or less, and is prepared from an alkali metal salt of a hydrous crystalline silicotitanate. The granular adsorbent of the present invention has a finer grain size and a higher adsorption rate as compared with commercially available common adsorbents (for example, zeolite-based adsorbents are pellets having a grain size of approximately 1.5 mm). On the other hand, when a powdery adsorbent is packed within the adsorption column, and water is passed through the adsorption column, the powdery adsorbent flows out the column. Thus, it is preferred that the granular adsorbent used in the present invention has a predetermined grain size. The granular adsorbent may be prepared by subjecting a mixed gel of a hydrous crystalline silicotitanate and a titanate salt to known granulation methods such as stirring mixing granulation, tumbling granulation, extrusion granulation, crushing granulation, fluidized bed granulation, spray dry granulation, compression granulation, and melt granulation.

The granular adsorbent granulated without using a binder is employed in the treatment method of the present invention using the adsorbent packed within the adsorbent column, since the adsorbent quantity per unit volume is increased, and thus the treatment amount per unit volume of the same adsorption column is increased.

The granular adsorbent having a grain size falling within the above-described predetermined range used in the present invention preferably has a strength of 0.1 N or more in a wet condition, and does not collapse under the pressure (in general, 0.1 MPa to 1.0 MPa) applied by passing the radioactive waste water to be treated for a long period of time.

The adsorbent used in the present invention can be produced by adopting a first step of mixing a silicic acid source, titanium tetrachloride, water, and at least one of a sodium compound and a potassium compound, to obtain a mixed gel; and a second step of allowing the mixed gel obtained by the first step to undergo hydrothermal reaction, wherein in the first step, the silicic acid source and titanium tetrachloride are added so as for the molar ratio between Ti and Si contained in the mixed gel to be Ti/Si = 1.2 or more and 1.5 or less; the total of the concentration of the silicic acid source in terms of $SiO_2$ and the concentration of titanium tetrachloride in terms of $TiO_2$ to be 2% by mass or more and 40% by mass or less; and the molar ratio between $A_2O$ and $SiO_2$ to be $A_2O/SiO_2$=0.5 or more and 2.5 or less.

Examples of the silicic acid source used in the first step include sodium silicate. In addition, examples of the silicic acid source also include an active silicic acid obtained by cationic exchange of an alkali silicate (namely, an alkali metal salt of silicic acid). The active silicic acid is obtained by bringing an alkali silicate aqueous solution into contact with, for example, a cationic exchange resin to perform a cationic exchange. As the alkali silicate aqueous solution, a sodium silicate aqueous solution usually called a liquid glass (for example, liquid glass No. 1 to liquid glass No.4) is suitably used. An alkali silicate aqueous solution prepared by dissolving an alkali metasilicate in a solid form in water may be used. An alkali metasilicate is produced through a crystallization step, and hence is sometimes small in the content of impurities. The alkali silicate aqueous solution is used as diluted with water, if necessary. As the cationic exchange resin used when the active silicic acid is prepared, any suitable known cationic exchange resins can be used, without being particularly limited. In the step of contacting the alkali silicate aqueous solution and the cationic exchange resin with each other, for example, the alkali silicate aqueous solution is diluted with water so as for the silica concentration to be 3% by mass or more and 10% by mass or less, and then the diluted alkali silicate aqueous solution is brought into contact with a H-type strongly acidic or weakly acidic cationic exchange resin to be dealkalized. Moreover, if necessary, a deanionization can also be applied by bringing the diluted alkali silicate aqueous solution into contact with an OH-type strongly basic anionic exchange resin. By this step, an active silicic acid aqueous solution is prepared.

Examples of the sodium compound used in the first step include sodium hydroxide and sodium carbonate. In addition, examples of the potassium compound include potassium hydroxide and potassium carbonate.

When a sodium compound and a potassium compound are used in the first step, the proportion of the number of moles of the potassium compound in relation to the total number of moles of the sodium compound and the potassium compound is preferably larger than 0% and 50% or less and more preferably 5% or more and 30% or less.

The silicic acid source and titanium tetrachloride are added so as for the molar ratio Ti/Si between the Ti originating from titanium tetrachloride and the Si originating from the silicic acid source in the mixed gel to be 1.2 or more and 1.5 or less. As a result of the investigation performed by the present inventors, by setting the ratio Ti/Si in the mixed gel within the above-described molar ratio range, a crystalline silicotitanate being high in the degree of crystallinity and having a crystallite diameter and a half width falling within the above-described ranges can be obtained more easily.

In the first step, the silicic acid source, the sodium compound, the potassium compound, and titanium tetrachloride can be each added to the reaction system in a form of an aqueous solution. In some cases, these ingredients can also be each added in a solid form. Moreover, in the first step, the concentration of the obtained mixed gel can be adjusted, if necessary, by using pure water in the obtained mixed gel.

In the first step, the silicic acid source, the sodium compound, the potassium compound, and titanium tetrachloride can be added in various addition orders. For example, here may be suitably mentioned (1) an order in which titanium tetrachloride is added to the mixture of the silicic acid source, water, and at least one of the sodium compound and the potassium compound, or (2) an order in which at least one of the sodium compound and the potassium compound is added to the mixture of the active silicic acid aqueous solution obtained by cationic exchange of an alkali silicate, titanium tetrachloride and water.

In the first step, the sodium compound and/or the potassium compound is preferably added so as for the total concentration (the concentration of $A_2O$) of sodium and potassium in the mixed gel in terms of $Na_2O$ to be 0.5% by mass or more and 15.0% by mass or less, and in particular, 0.7% by mass or more and 13% by mass or less. The total mass of sodium and potassium in the mixed gel in terms of $Na_2O$, and the total concentration of sodium and potassium in the mixed gel in terms of $Na_2O$ (hereinafter, referred to as "the total concentration of sodium and potassium (in the case where no potassium compound is used in the first step, the sodium concentration)") is calculated by using the following formulas:

[Formula 1]

$$\text{Total mass (g) of sodium and potassium in mixed gel in terms of } Na_2O = (\text{number of moles of A - number of moles of chloride ions originating from titanium tetrachloride}) \times 0.5 \times \text{molecular weight of } Na_2O$$

[Formula 2]

$$\text{Total concentration (\% by mass) of sodium and potassium in mixed gel in terms of } Na_2O = \text{total mass (g) of sodium and potassium in mixed gel in terms of } Na_2O/(\text{mass of water in mixed gel + total mass (g) of sodium and potassium in mixed gel in terms of } Na_2O) \times 100$$

When sodium silicate is used as the silicic acid source, the sodium component in the sodium silicate simultaneously serves as a sodium source in the mixed gel. Therefore, "the mass (g) of sodium in the mixed gel in terms of $Na_2O$" as referred to herein is calculated as the sum of all the sodium components in the mixed gel. Similarly, "the mass (g) of potassium in the mixed gel in terms of $Na_2O$" is also calculated as the sum of all the potassium components in the mixed gel.

In the first step, it is desired, in order to obtain a uniform gel, that a titanium tetrachloride aqueous solution is added over a certain period of time in a stepwise manner or continuously. For that purpose, a Perista pump or the like can be suitably used for the addition of titanium tetrachloride.

The mixed gel obtained in the first step is preferably subjected to aging, before performing the below-described second step of the hydrothermal reaction, over a period of time of 0.1 hour or more and 5 hours or less, at 10°C or higher and 100°C or lower, for the purpose of obtaining a uniform product.

The mixed gel obtained in the first step is subjected to the second step of the hydrothermal reaction, and thus a crystalline silicotitanate is obtained. The hydrothermal reaction is not limited with respect to the conditions as long as the conditions of the hydrothermal reaction allow a crystalline silicotitanate to be synthesized. Usually, the hydrothermal reaction is allowed to proceed under pressure in an autoclave, at a temperature of preferably 120°C or higher and 200°C or lower, and further preferably 140°C or higher and 180°C or lower, over preferably 6 hours or more and 90 hours or less, and further preferably 12 hours or more and 80 hours or less. The reaction time can be selected according to the scale of the synthesis apparatus.

The hydrated product containing the crystalline silicotitanate obtained in the second step is subjected to a granulation into a granular form, and classified as a grain size of 250 $\mu$m or more and 1200 $\mu$m or less. The classification can be performed by a common method using a sieve having a predetermined opening.

In the treatment method of the present invention, the adsorbent is packed within an adsorption column so as for the layer height to be 10 cm or more and 300 cm or less, preferably 20 cm or more and 250 cm or less, and more preferably 50 cm or more and 200 cm or less. In the case where the layer height is less than 10 cm, the adsorbent layer cannot be packed uniformly when the adsorbent is packed in the adsorption column, thus the water is not uniformly passed through the adsorbent layer, and consequently the treated water quality is degraded. Increasing the layer height is preferable since an appropriate pressure difference of passing water can be achieved, the treated water quality is stabilized, and the total amount of the treated water is increased; however, a layer height of 300 cm or less is considered in relation with the pressure difference of passing water from the viewpoint of practicability.

The radioactive waste water containing radioactive cesium and radioactive strontium are passed through the adsorption column packed within the adsorbent, at a linear velocity (LV) of 1 m/h or more and 40 m/h or less, preferably 5 m/h or more and 30 m/h or less, more preferably 10 m/h or more and 20 m/h or less, and at a space velocity (SV) of 200 $h^{-1}$ or less, preferably 100 $h^{-1}$ or less, more preferably 50 $h^{-1}$ or less, preferably 5 $h^{-1}$ or more, more preferably 10 $h^{-1}$ or more. The linear velocity is preferably 40 m/h or less in consideration of the pressure difference of passing water, and is preferably 1 m/h or more in consideration of the quantity of water to be treated. Even at the space velocity (SV) used in common waste water treatment of 20 $h^{-1}$ or less, in particular, approximately 10 $h^{-1}$, the effect of the adsorbent of the present invention can be achieved; however, a waste water treatment using a common adsorbent cannot achieve a stable treated water quality, and cannot achieve a removal effect. In the present invention, the linear velocity (LV) and the space velocity (SV) can be increased without increasing the size of the adsorption column larger.

The linear velocity (LV) is the value obtained by dividing the water quantity ($m^3$/h) passed through the adsorption column by the cross-sectional area ($m^2$) of the adsorption column. The space velocity (SV) is the value obtained by dividing the water quantity ($m^3$/h) passed through the adsorption column by the volume ($m^3$) of the adsorbent packed in the adsorption column.

EXAMPLES

Hereinafter, the present invention is described specifically by way of Examples and Comparative Examples, but the present invention is not limited to these Examples. The analyses of the various components and the various adsorbents were performed using the apparatuses and under the conditions described below.

<Cesium Concentration and Strontium Concentration>

Quantitative analysis of Cesium 133 and strontium 88 was performed by using an inductively coupled plasma mass spectrometer (ICP-MS, Model: Agilent 7700x) manufactured by Agilent Technologies, Inc. The measurement wavelength of Cs was set at 697.327 nm, and the measurement wavelength of Sr was set at 216.596 nm. The standard samples used were as follows: the aqueous solutions each containing 0.3% of NaCl, and containing 100 ppm, 50 ppm and 10 ppm of Cs, respectively; and the aqueous solutions each containing 0.3% of NaCl, and containing 100 ppm, 10 ppm and 1 ppm of Sr, respectively. Acidic samples to be analyzed were prepared by diluting samples by a factor 1000 with a dilute nitric acid.

[Production Examples 1 to 3]

(1) First Step

Mixed aqueous solutions were obtained by mixing and stirring sodium silicate (manufactured by Nippon Chemical Industrial Co., Ltd. [$SiO_2$: 28.96%, $Na_2O$: 9.37%, $H_2O$: 61.67%, $SiO_2$/$Na_2O$=3.1]), 25% caustic soda (industrial 25% sodium hydroxide, NaOH: 25%, $H_2O$: 75%), 85% caustic potash (solid reagent, potassium hydroxide, KOH: 85%) and pure water in the amounts shown in Table 1. To each of the obtained mixed aqueous solutions, a titanium tetrachloride aqueous solution (36.48% aqueous solution, manufactured by OSAKA Titanium Technologies Co., Ltd.) was continuously added in the amount shown in Table 1, with a Perista pump over 0.5 hour to produce a mixed gel. The obtained mixed gels were allowed to stand still for aging over 1 hour at room temperature (25°C) after the addition of the titanium tetrachloride aqueous solution.

(2) Second Step

The obtained mixed gels in the first step were placed in an autoclave, increased in temperature to 170°C over 1 hour, and reacted at this temperature while stirring. Each slurry after the reaction was filtered, washed, and dried to yield an aggregated crystalline silicotitanate.

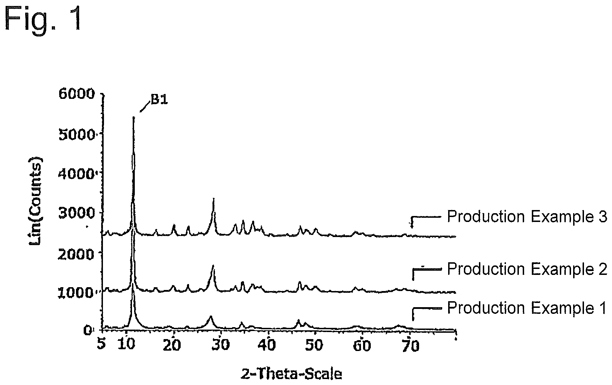

The compositions determined from the X-ray diffraction analysis and the contents of Na and K determined from the ICP analysis of the obtained crystalline silicotitanate are shown in Table 2, the half widths and the crystallite diameters of the obtained crystalline silicotitanates are shown in Table 3, and the X-ray diffraction charts of the obtained crystalline silicotitanates are shown in Fig. 1.

[Table 1]

Table 1 Production Conditions

| | | Production Examples | | |
|---|---|---|---|---|
| | | 1 | 2 | 3 |
| Charged amounts (g) | Sodium silicate No. 3 | 60 | 60 | 90 |
| | Silica gel | - | - | - |
| | Titanium tetrachloride solution | 203.3 | 203.3 | 203.3 |
| | 25% Caustic soda | 308.2 | 224.3 | 139.8 |
| | 85% Caustic potash | - | 34.5 | 69.4 |
| | Ion-exchange water | 33.2 | 82.5 | 132.2 |
| Mixed gel | Molar ratio Ti/Si | 1.33 | 1.33 | 1.33 |
| | Molar ratio $K_2O/Na_2O$ | 0/100 | 25/75 | 50/50 |
| | a: Concentration in terms of $SiO_2$ (%) | 2.83 | 2.83 | 4.04 |
| | b: Concentration in terms of $TiO_2$ (%) | 5.14 | 5.14 | 4.9 |
| | a+b | 7.97 | 7.97 | 8.94 |
| | Molar ratio $A_2O/SiO_2$ | 0.926 | 0.926 | 0.721 |
| | Concentration in terms of $Na_2O$ (%) | 3.64 | 3.71 | 4.2 |
| Reaction conditions | Reaction temperature (°C) | 170 | 170 | 170 |
| | Reaction time (h) | 96 | 96 | 96 |

[Table 2]

Table 2 Contents of Na and K Determined from ICP Analysis

| | X-ray diffraction structure | Content of $Na_2O$ (% by mass) | Content of $K_2O$ (% by mass) |
|---|---|---|---|
| Production Examples 1 | Single phase $Na_4Ti_4Si_3O_{16}\cdot 6H_2O$; other crystalline silicotitanates and $TiO_2$ were not detected. | 20 | 0 |
| Production Examples 2 | Single phase $A_4Ti_4Si_3O_{16}\cdot 6H_2O$ (A=Na and K); other crystalline silicotitanates and $TiO_2$ were not detected. | 12.7 | 8.3 |
| Production Examples 3 | Single phase $A_4Ti4Si_3O_{16}\cdot 6H_2O$ (A=Na and K); other crystalline silicotitanates and $TiO_2$ were not detected. | 11.1 | 10.8 |

[Table 3]

Table 3 Half Widths and Crystallite Diameters

|  | Half width (°) | Crystallite diameter (Å) |
|---|---|---|
| Production Examples 1 | 0.77 | 108 |
| Production Examples 2 | 0.42 | 201 |
| Production Examples 3 | 0.41 | 202 |
| Comparative Example 1 | 2.39 | 35 |

The slurry containing each of the above-described crystalline silicotitanates was placed in a cylindrical extruder equipped, at the distal end portion thereof, with a screen having a perfect circle equivalent diameter of 0.6 mm, and the slurry was extrusion molded. The hydrous molded body extruded from the screen was dried at 120°C for 1 day, under atmospheric pressure. The obtained dried product was lightly crushed, and then sieved with a sieve having an opening of 600 $\mu$m. The residue on the sieve was again crushed, and the whole amount of crushed residue was sieved with a sieve having an opening of 600 $\mu$m. Next, the whole amount having passed through the sieve having an opening of 600 $\mu$m was collected and sieved with a sieve having an opening of 300 $\mu$m, and the residue on the sieve was collected and was adopted as a sample.

[Example 1]

<Preparation of Simulated Contaminated Seawater 1>

By adopting the following procedures, simulated contaminated water containing non radiative cesium and strontium, simulating the contaminated water of Fukushima Daiichi Nuclear Power Station was prepared.

First, an aqueous solution was prepared so as to have a salt concentration of 3.0 % by mass by using a chemical for producing artificial seawater of Osaka Yakken Co., Ltd., MARINE ART SF-1 (sodium chloride: 22.1 g/L, magnesium chloride hexahydrate: 9.9 g/L, calcium chloride dihydrate: 1.5 g/L, anhydrous sodium sulfate: 3.9 g/L, potassium chloride: 0.61 g/L, sodium hydrogen carbonate: 0.19 g/L, potassium bromide: 96 mg/L, borax: 78 mg/L, anhydrous strontium chloride: 0.19 g/L, sodium fluoride: 3 mg/L, lithium chloride: 1 mg/L, potassium iodide: 81 $\mu$g/L, manganese chloride tetrahydrate: 0.6 $\mu$g/L, cobalt chloride hexahydrate: 2 $\mu$g/L, aluminum chloride hexahydrate: 8 $\mu$g/L, ferric chloride hexahydrate: 5 $\mu$g/L, sodium tungstate dihydrate: 2 $\mu$g/L, ammonium molybdate tetrahydrate: 18 $\mu$g/L). To the prepared aqueous solution, cesium chloride was added so as for the cesium concentration to be 1 mg/L, and thus the simulated contaminated seawater 1 having a cesium concentration of 1.0 mg /L was prepared. A fraction of the simulated contaminated seawater 1 was sampled, and analyzed with ICP-MS; consequently, the cesium concentration was found to be 1.09 mg/L, and the strontium concentration was found to be 6.52 mg/L.

The adsorbent having a grain size of 300 $\mu$m or more and 600 $\mu$m or less, prepared in Production Example 2, was crushed in a mortar, a 100-ml Erlenmeyer flask was charged with 0.5 g of the crushed adsorbent, 50 ml of the simulated contaminated seawater 1 was added in the flask and allowed to stand still for 7 days; then a fraction of the simulated contaminated seawater 1 was sampled, and the cesium and strontium concentrations were measured; the cesium concentration was found to be 0.04 mg/L, and the strontium concentration was found to be 2.46 mg/L.

As Comparative Example, a test was implemented by using a crystalline silicotitanate represented by $Na_{8.72}Ti_5Si_{12}O_{38} \cdot nH_2O$, in the same procedures as described above.

From the cesium and strontium concentrations before and after the treatment with the adsorbent the removal rates of cesium and strontium were calculated. The results thus obtained are shown in Table 4. As can be seen from Table 4, the adsorbent of the present invention is higher in the removal rates of cesium and strontium than the crystalline silicotitanate used as Comparative Example, and both of cesium and strontium were able be removed by adsorption.

[Table 4]

Table 4 Removal Rates of Cs and Sr

|  | Cs removal rate | Sr removal rate |
|---|---|---|
| Example 1 | 95% | 58% |
| Comparative Example | 83% | 27% |

[Example 2]

<Preparation of Simulated Contaminated Seawater 2>

By adopting the following procedures, simulated contaminated water containing non radiative cesium and strontium, simulating the contaminated water of Fukushima Daiichi Nuclear Power Station was prepared.

First, an aqueous solution was prepared so as to have a salt concentration of 0.17 % by mass by using a chemical for producing artificial seawater of Osaka Yakken Co., Ltd., MARINE ART SF-1. To the prepared aqueous solution, cesium chloride was added so as for the cesium concentration to be 1 mg/L, and thus the simulated contaminated seawater 2 having a cesium concentration of 1.0 mg /L was prepared. A fraction of the simulated contaminated seawater 2 was sampled, and analyzed with ICP-MS; consequently, the cesium concentration was found to be 0.81 mg/L to 1.26 mg/L, and the strontium concentration was found to be 0.26 mg/L to 0.42 mg/L.

A glass column having an inner diameter of 16 mm was packed with 20 ml of the adsorbent having a grain size of 300 $\mu$m to 600 $\mu$m, prepared in Production Example 2, so as for the layer height to be 10 cm; the simulated contaminated seawater 2 was passed through the column at a flow rate of 67 ml/min (linear velocity (LV): 20 m/h, space velocity (SV): 200 h$^{-1}$); and the outlet water was periodically sampled, and the cesium concentration and the strontium concentration were measured. The results of the analysis of the outlet water were such that the cesium concentration was 0.00 mg/L to 0.59 mg/L, and the strontium concentration was 0.00 mg/L to 0.31 mg/L.

As Comparative Example, a test was implemented by using a crystalline silicotitanate represented by $Na_{8.72}Ti_5Si_{12}O_{38} \cdot nH_2O$ in the same procedures as described above.

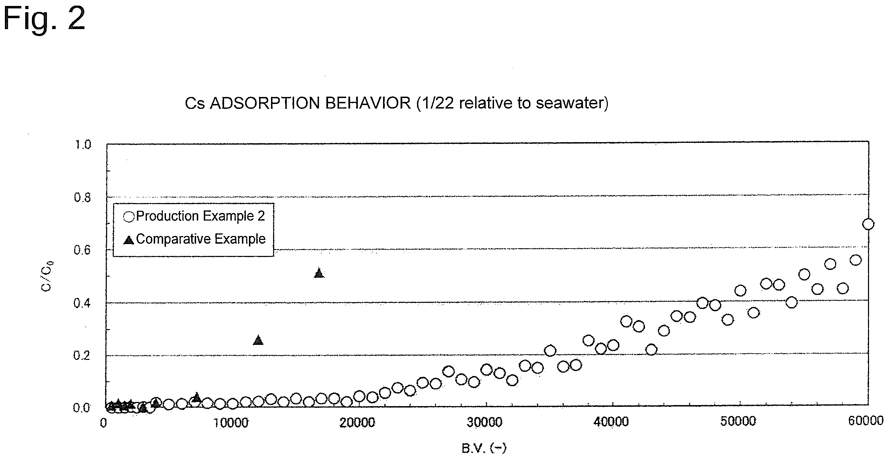

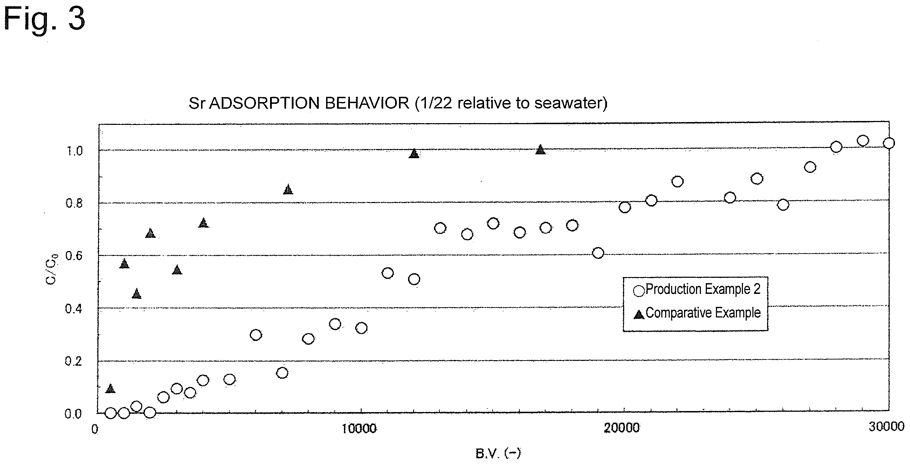

The cesium removal performance is shown in Fig. 2, and the strontium removal performance is shown in Fig. 3. In each of Figs. 2 and 3, the horizontal axis is the B.V. representing the ratio of the volume of the simulated contaminated seawater passing through the column to the volume of the adsorbent; the vertical axis represents the value obtained by dividing the cesium or strontium concentration at the column outlet by the cesium or strontium concentration at the column inlet, respectively.

As can be seen from Fig. 2, even when the layer height was 10 cm and the space velocity (SV) was 200 h$^{-1}$, cesium was able to be removed by adsorption to an extent of nearly 100% for the B.V. up to approximately 20000.

As can be seen from Fig. 3, when the layer height of the adsorbent in the adsorption column was 10 cm, and the space velocity (SV) was 200 h$^{-1}$, the adsorption removal performance of strontium is lower as compared with the adsorption removal performance of cesium; however, for the B.V. up to approximately 5000, strontium was able to be removed to an extent of approximately 80%, and for the B.V. up to 10000, strontium was able to be removed to an extent of approximately 60%.

The B.V. values associated with the ratios (C/Co) of the column outlet concentration (C) to the column inlet concentration (Co) of 1.0 for cesium and 0.1 for strontium are as large as 28000 for cesium and as large as 30000 for strontium; thus, it can be said that a very large amount of the simulated contaminated seawater can be treated.

[Example 3]

A glass column having an inner diameter of 16 mm was packed with 200 ml of the adsorbent having a grain size of 300 $\mu$m or more and 600 $\mu$m or less, prepared in Production Example 2, so as for the layer height to be 10 cm; the simulated contaminated seawater 3 (cesium concentration: 0.83 mg/L to 1.24 mg/L, strontium concentration: 0.29 mg/L to 0.44 mg/L) prepared in the same manner as the simulated contaminated seawater 2 was passed through the column at a flow rate of 6.5 ml/min (linear velocity (LV): 2 m/h, space velocity (SV): 20 h$^{-1}$); and the outlet water was periodically sampled, and the cesium concentration and the strontium concentration were measured.

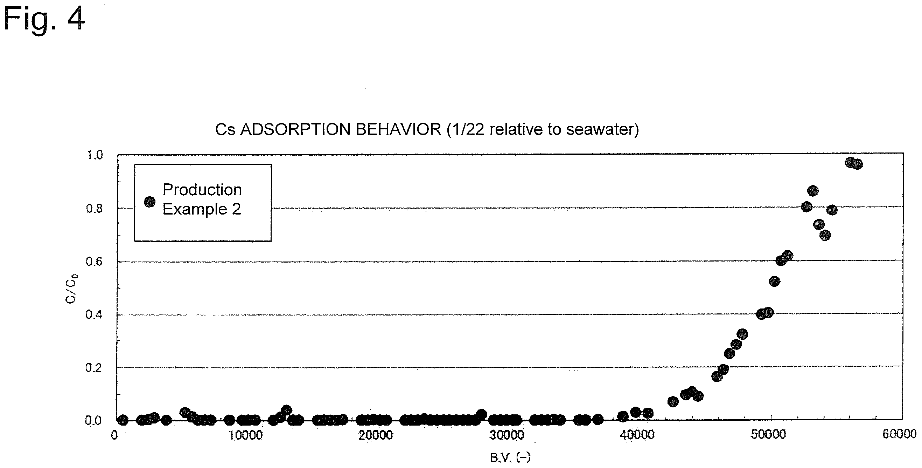

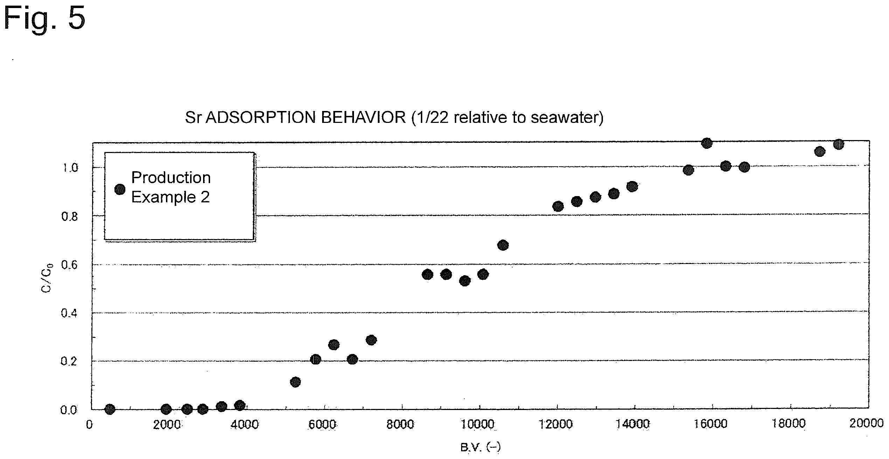

The cesium removal performance is shown in Fig. 4, and the strontium removal performance is shown in Fig. 5. In each of Figs. 4 and 5, the horizontal axis is the B.V. representing the ratio of the volume of the simulated contaminated seawater passing through the column to the volume of the adsorbent; the vertical axis represents the value obtained by dividing the cesium or strontium concentration at the column outlet by the cesium or strontium concentration at the column inlet, respectively. The results of the analysis of the outlet water were such that the cesium concentration was 0.00 mg/L to 0.89 mg/L, and the strontium concentration was 0.00 mg/L to 0.38 mg/L.

As can be seen from Fig. 4, cesium was able to be removed by adsorption to an extent of nearly 100% for the B.V. up to approximately 40000. From a comparison of Fig. 4 with Fig. 2, it can be said that for the adsorption removal of cesium, the adsorption removal performance of cesium is markedly higher in the case of the space velocity (SV) of 20 h$^{-1}$ than the case of the space velocity (SV) of 200 h$^{-1}$.

As can be seen from Fig. 5, strontium was able to be removed by adsorption to an extent of nearly 100% for the B.V. up to approximately 5000, and was able to be removed to an extent of approximately 70% for the B.V. of 7000. As can be seen from a comparison of Fig. 5 with Fig. 3, by setting the space velocity (SV) to be 20 h$^{-1}$, the adsorption removal performance of strontium was remarkably improved within the range of B.V. up to approximately 5000.

Accordingly, it has been able to be verified that by decreasing the space velocity (SV), the adsorption removal performances of cesium and strontium are remarkably improved.

## Claims

1. A treatment method of radioactive waste water containing radioactive cesium and radioactive strontium, comprising passing the radioactive waste water containing radioactive cesium and radioactive strontium through an adsorption column packed with an adsorbent for cesium and strontium, to adsorb the radioactive cesium and radioactive strontium on the adsorbent,

   wherein the adsorbent for cesium and strontium comprises a crystalline silicotitanate having a full width at half maximum, is short FWHM, of 0.3° or more and 0.9° or less of the diffraction peak in the lattice plane (100) at $2\theta=10°$ or more and $2\theta=13°$ or less in an X-ray diffraction analysis using Cu-K$\alpha$ line as an X-ray source and having a crystallite diameter obtained by the Scherrer equation on the basis of the FWHM of 60 Å or more and 250 Å or less, the crystalline silicotitanate represented by the general formula:
   $A_4Ti_4Si_3O_{16} \cdot nH_2O$ wherein A is Na or K or a combination thereof, and n represents a number of 0 to 8,
   wherein the adsorbent for cesium and strontium does not comprise titanate salts,
   wherein the adsorbent for cesium and strontium does not comprise any binders,
   wherein the adsorbent for cesium and strontium is a granular adsorbent having a grain size of 250 $\mu$m or more and 1200 $\mu$m or less,
   wherein the absorbent is packed to a height of 10 cm or more and 300 cm or less in the adsorption column, and
   wherein the radioactive waste water is passed through the adsorption column at a linear velocity of 1 m/h or more and 40 m/h or less and a space velocity of 200 h$^{-1}$ or less.

2. The treatment method according to claim 1, wherein the radioactive waste water is waste water containing a Na ion, a Ca ion and/or a Mg ion.

3. The treatment method according to claim 1 or 2, wherein the adsorbent comprises 99.5 % by mass or more of the crystalline silicotitanate.

## Patentansprüche

1. Behandlungsverfahren für radioaktives Abwasser, welches radioaktives Caesium und radioaktives Strontium enthält, welches aufweist, das radioaktive Abwasser, welches radioaktives Caesium und radioaktives Strontium enthält, durch eine Adsorptionssäule bzw. Adsobtionskolonne zu leiten, die mit einem Adsorptionsmittel für Caesium und Strontium bepackt ist, um das radioaktive Caesium und das radioaktive Strontium an dem Adsorptionsmittel zu adsorbieren,

   wobei das Adsoptionsmittel für Caesium und Strontium ein kristallines Titan-Siliziumoxid mit einer vollen Breite bei halbem Maximum, kurz gesagt FWHM bzw. Full Width at Half Maximum, von 0,3° oder mehr und 0,9° oder weniger der Diffraktionsspitze in der Gitterebene (100) bei $2\theta = 10°$ oder mehr und $2\theta = 13°$ oder weniger hat, und zwar in einer Röntgendiffraktionsanalyse unter Verwendung einer CU-K$\alpha$-Linie als eine Röntgenquelle und mit einem Kristalldurchmesser, der durch die Scherrer-Gleichung auf der Basis von FWHM von 60 Å oder mehr und 250 Å oder weniger erhalten wurde, wobei das kristalline Titan-Siliziumoxid durch die allgemeine Formel $A_4Ti_4Si_3O_{16} \cdot nH_2O$ dargestellt wird, wobei A hier Na oder K oder eine Kombination davon ist, und wobei n eine Zahl von 0 bis 8 darstellt, wobei das Adsorptionsmittel für Caesium und Strontium keine Titansalze aufweist, wobei das Adsorptionsmittel für Caesium und Strontium keine Bindemittel aufweist, wobei das Adsorptionsmittel für Caesium und Strontium ein körniges Adsorptionsmittel mit einer Korngröße von 250 $\mu$m oder mehr und 1200 $\mu$m oder weniger ist,

wobei das Adsorptionsmittel bis zu einer Höhe von 10 cm oder mehr und 300 cm oder weniger in der Adsorptionskolonne gepackt ist und

wobei das radioaktive Abwasser durch die Adsorptionskolonne mit einer linearen Geschwindigkeit von 1 m/h oder mehr und 40 m/h oder weniger und mit einer Raumgeschwindigkeit von 200 h$^{-1}$ oder weniger geleitet wird.

2. Behandlungsverfahren nach Anspruch 1, wobei das radioaktive Abwasser ein Abwasser ist, welches ein Na-Ion, ein Ca-Ion und/oder ein Mg-Ion enthält.

3. Behandlungsverfahren nach Anspruch 1 oder 2, wobei das Adsorptionsmittel 99,5 Massen-% oder mehr des kristallinen Titan-Siliziumoxids enthält.

**Revendications**

1. Procédé de traitement d'eaux usées radioactives contenant du césium radioactif et du strontium radioactif, comprenant le passage des eaux usées radioactives contenant du césium radioactif et du strontium radioactif à travers une colonne d'adsorption remplie d'un adsorbant pour le césium et le strontium, pour adsorber le césium radioactif et le strontium radioactif sur l'adsorbant,

dans lequel l'adsorbant pour le césium ou le strontium comprend un silicotitanate cristallin ayant une pleine largeur à mi-hauteur, en abrégé FWHM, de 0,3° ou plus et de 0,9° ou moins du pic de diffraction dans le plan de réseau (100) à $2\underline{\theta}=10°$ ou plus et $2\underline{\theta}=13°$ ou moins dans une analyse de diffraction à rayons X utilisant une ligne Cu-K$\alpha$ en tant que source de rayons X et ayant un diamètre de cristallite obtenu par l'équation de Scherrer sur la base de la FWHM de 60 Å ou plus et 250 Å ou moins, le silicotitanate cristallin étant représenté par la formule générale : $A_4Ti_4Si_3O_{16}\cdot nH_2O$ où A est Na ou K ou une combinaison de ceux-ci, et n représente un nombre de 0 à 8,
dans lequel l'adsorbant pour le césium et le strontium ne comprend pas de sels de titanate,
dans lequel l'adsorbant pour le césium et le strontium ne comprend aucun chélateur,
dans lequel l'adsorbant pour le césium et le strontium est un adsorbant granulaire ayant une taille de grain de 250 $\mu$m ou plus et 1200 $\mu$m ou moins,
dans lequel l'absorbant est rempli jusqu'à une hauteur de 10 cm ou plus et de 300 cm ou moins dans la colonne d'adsorption, et
dans lequel les eaux usées radioactives sont passées à travers la colonne d'adsorption à une vitesse linéaire de 1 m/h ou plus et de 40 m/h ou moins et à une vitesse spatiale de 200 h$^{-1}$ ou moins.

2. Procédé de traitement selon la revendication 1, dans lequel les eaux usées radioactives sont des eaux usées contenant un ion Na, un ion Ca et/ou un ion Mg.

3. Procédé de traitement selon la revendication 1 ou 2, dans lequel l'adsorbant comprend 99,5 % en masse ou plus du silicotitanate cristallin.

# Fig. 1

# Fig. 2

Cs ADSORPTION BEHAVIOR (1/22 relative to seawater)

EP 3 389 054 B1

Fig. 3

Sr ADSORPTION BEHAVIOR (1/22 relative to seawater)

Fig. 4

Cs ADSORPTION BEHAVIOR (1/22 relative to seawater)

EP 3 389 054 B1

# Fig. 5

Sr ADSORPTION BEHAVIOR (1/22 relative to seawater)

EP 3 389 054 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5285183 B
- JP 5696244 B
- JP 2014029269 A

**Non-patent literature cited in the description**

- Contaminated Liquid Water Treatment for Fukushima Daiichi NPS (CLWT)'' (''Contaminated Liquid Water Treatment for Fukushima Daiichi NPS (CLWT). Division of Nuclear Fuel Cycle and Environment in the Atomic Energy Society of Japan
- *JAEA-Research,* 2011, 037